# EUROPEAN PATENT SPECIFICATION

(11) **EP 2 557 498 B1**
(45) Date of publication and mention of the grant of the patent: **20.05.2015**
(21) Application number: 11856751.0
(22) Date of filing: 31.08.2011
(51) Int. Cl.: G06F 9/455, G06F 9/445

(54) **UPDATING METHOD AND COMPUTER SYSTEM FOR HYPERVISOR COMPONENTS**
AKTUALISIERUNGSVERFAHREN UND COMPUTERSYSTEM FÜR HYPERVISOR-KOMPONENTEN
PROCÉDÉ DE MISE À JOUR ET SYSTÈME INFORMATIQUE DESTINÉS À DES COMPOSANTS D'UN HYPERVISEUR

(30) Priority: 30.01.2011 CN 201110033485
(43) Date of publication of application: 13.02.2013
(73) Proprietor: Huawei Technologies Co., Ltd., Longgang District Shenzhen, Guangdong 518129 (CN)
(72) Inventor: LIN, Qiangmin, Guangdong 518129 (CN)
(74) Representative: Pfenning, Meinig & Partner GbR
(86) International application number: PCT/CN2011/079176
(87) International publication number: WO 2012/100535

(56) References cited:
- CN-A- 102 073 529
- US-A1- 2008 189 697
- US-A1- 2009 064 136
- US-A1- 2009 210 888
- US-A1- 2011 202 917
- US-B2- 7 827 443

## Description

### FIELD OF THE INVENTION

The present invention relates to the field of computer technologies, and in particular, to a method for upgrading a Hypervisor component, and a computer system.

### BACKGROUND OF THE INVENTION

Currently, through virtual machine software, for example, one or multiple virtual computers may be emulated on a single physical computer. These virtual machines work as "real" computers. A virtual machine may be installed with an operating system and an application program, and may access a network resource. For an application program that is running within the virtual machine, it seems that the application program acts just as it runs on a "real" computer.

In a virtualization system, after the system runs for a period of time, if some functions are found inadequate or defective, some system components may be replaced and the system or a service is restarted to enhance or repair a system function, so as to achieve a goal of system security and stability. However, in a field of telecommunication products, a requirement for reliability of a product is generally quite high. A reliability requirement for a carrier-class virtualization product cannot be satisfied by replacing a component and restarting a system.

If a Hypervisor component of a communication device A needs to be upgraded, generally, a service on the communication device A is migrated to another communication device B by using a live migration technology, and the service on the communication device A is stopped. After a Hypervisor component that is to be upgraded and of the communication device A is upgraded, the communication device A is restarted, and a service that is executed on the communication device B is migrated to the communication device A.

With an existing manner for upgrading a Hypervisor component, many device resources need to be occupied, and in a service live migration process, smoothly running of the service may be affected.

### SUMMARY OF THE INVENTION

Embodiments of the present invention provide a method for upgrading a Hypervisor component, and a computer system, so as to reduce a device resource that upgrading the Hypervisor component needs to occupy and mitigate an impact caused by the upgrade on a service.

To solve the preceding technical problem, the embodiments of the present invention provide the following technical solutions.

A method for upgrading a Hypervisor component includes:
calling, by a kernel of a virtual machine, a hypercall interface of a Hypervisor, and loading an upgrade file to an address space of the Hypervisor, where the upgrade file is used for upgrading a target function in a Hypervisor component, and the upgrade file includes an upgrade function that corresponds to the target function;
   calling, by the kernel of the virtual machine, the hypercall interface of the Hypervisor, and replacing an instruction at a starting position of the target function in the Hypervisor component with a first interrupt instruction; and
   if it is judged that a breakpoint exception is caused by the first interrupt instruction, calling, by the kernel of the virtual machine, the hypercall interface of the Hypervisor, and replacing the first interrupt instruction with a jump instruction, so as to upgrade the target function in the Hypervisor component to the upgrade function, where the jump instruction is directed to the upgrade function in the upgrade file in the address space.

A computer system includes a central processing unit (CPU) and a storage for storing program code, and the CPU is configured to run a program that corresponds to the program code by reading the program code stored in the storage. A kernel of a virtual machine and a Hypervisor, where
the kernel of the virtual machine is configured to: call a hypercall interface of the Hypervisor, and load an upgrade file to an address space of the Hypervisor, where the upgrade file is used for upgrading a target function in a Hypervisor component, and the upgrade file includes an upgrade function that corresponds to the target function; and call the hypercall interface of the Hypervisor, and replace an instruction at a starting position of the target function in the Hypervisor component with a first interrupt instruction; and
the kernel of the virtual machine is further configured to, if it is judged that a breakpoint exception is caused by the first interrupt instruction, call the hypercall interface of the Hypervisor, and replace the first interrupt instruction with a jump instruction, so as to upgrade the target function in the Hypervisor component to the upgrade function, where the jump instruction is directed to the upgrade function in the upgrade file in the address space.

It can be seen from the preceding that, in the embodiments of the present invention, the Hypervisor provides a hypercall interface; and the kernel of the virtual machine calls the hypercall interface of the Hypervisor, loads an upgrade file used for upgrading the target function in Hypervisor component to the address space of the Hypervisor, calls the hypercall interface of the Hypervisor, and replaces the instruction at the starting position of the target function in the Hypervisor component that needs to be upgraded with an interrupt instruction; and if it is judged by the interrupt processing program that a breakpoint exception is caused by the interrupt instruction, calls the hypercall interface of the Hypervisor, and upgrades the target function in the Hypervisor component that needs to be upgraded to the upgrade function that corresponds to the target function and in the upgrade file. Because the Hypervisor component is upgraded online by using the hypercall interface provided by the Hypervisor, a service does not need to be migrated to another communication device in a live way, so that a device resource that upgrading the Hypervisor component needs to occupy is relatively reduced, and meanwhile, an impact caused by the upgrade of the Hypervisor component on an upper layer service is mitigated. Furthermore, with this upgrade mechanism, a service does not need to be interrupted, and with high instantaneity, upgrade time is relatively shorter.

### BRIEF DESCRIPTION OF THE DRAWINGS

To describe the technical solutions in the embodiments of the present invention more clearly, the accompanying drawings required for describing the embodiments are introduced briefly in the following. Apparently, the accompanying drawings in the following description are only some embodiments of the present invention, and persons of ordinary skill in the art may also derive other drawings from these accompanying drawings without any creative effort.
FIG. 1 is a schematic diagram of a running architecture of a virtualization system according to an embodiment of the present invention;
FIG. 2 is a schematic flowchart of a method for upgrading a Hypervisor component according to an embodiment of the present invention;
FIG. 3-a is a schematic diagram of an architecture of a virtualization system module according to an embodiment of the present invention;

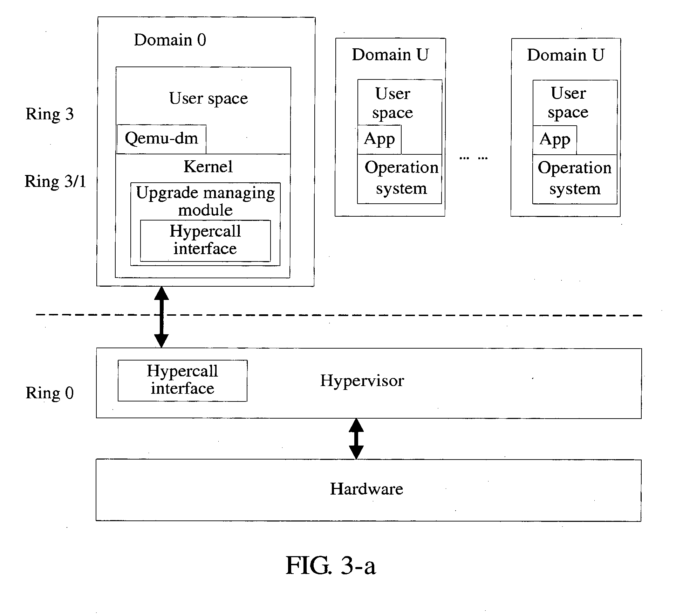

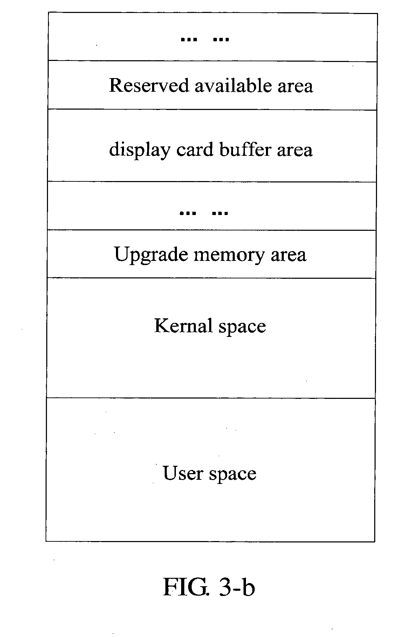

FIG. 3-b is a schematic diagram of a partitioned upgrade memory area according to an embodiment of the present invention;

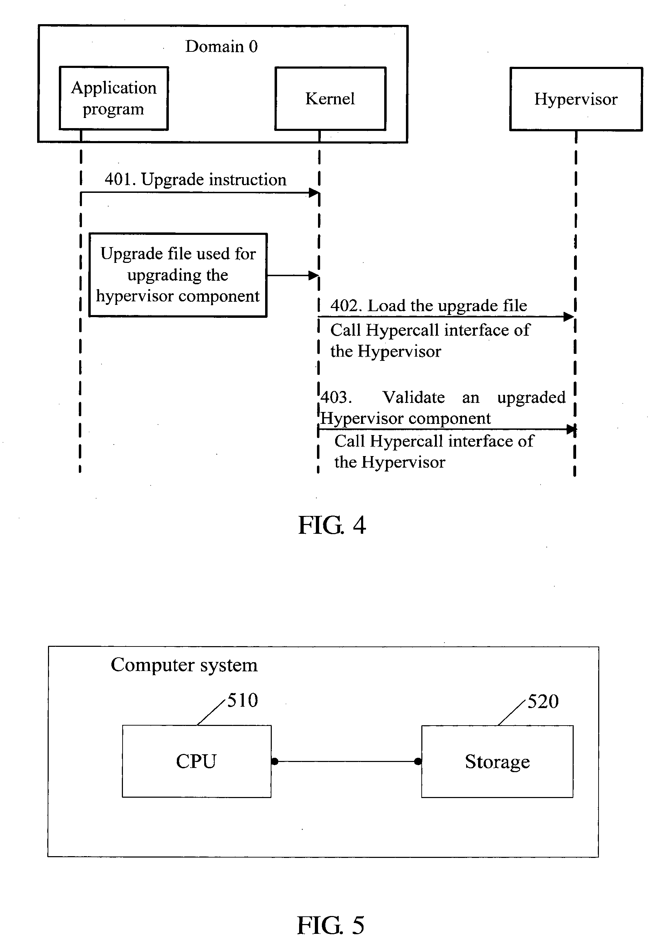

FIG. 4 is a schematic flowchart of a method for upgrading a Hypervisor component according to an embodiment of the present invention; and
FIG. 5 is a schematic diagram of a computer system according to an embodiment of the present invention.

### DETAILED DESCRIPTION OF THE EMBODIMENTS

Embodiments of the present invention provide a method for upgrading a Hypervisor component, and a computer system.

To facilitate an understanding of the technical solutions of the present invention clearer for persons skilled in the art, the technical solutions in the embodiments of the present invention are clearly and completely described in the following with reference to the accompanying drawings in the embodiments of the present invention. Apparently, the embodiments to be described are only a part rather than all of the embodiments of the present invention. Based on the embodiments of the present invention, all other embodiments obtained by persons skilled in the art without making any creative effort shall fall within the protection scope of the present invention.

To facilitate understanding, a running architecture of a virtualization system is introduced briefly in the following.

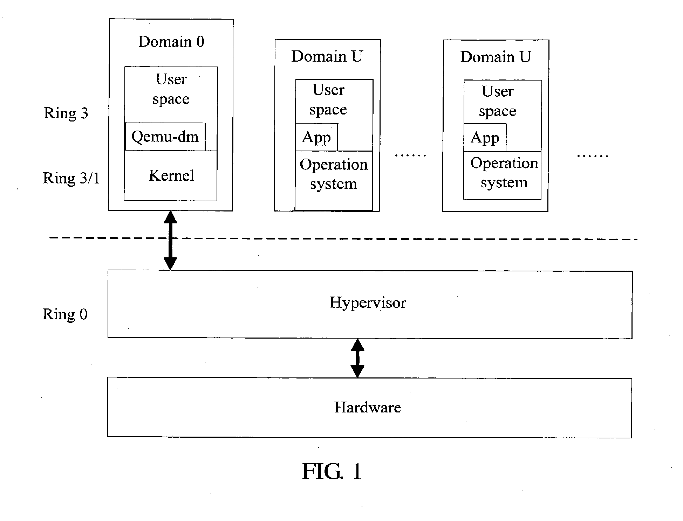

Referring to FIG. 1, a virtualization environment may include the following mutually collaborating elements: a Hypervisor, a Domain 0, and a Domain U.

The Hypervisor is a software layer located between a hardware layer and an operating system of a virtual machine, and is mainly responsible for a CPU (CPU, central processing unit) scheduling and memory allocation among virtual machines. Because virtual machines share the same hardware processing environment, the Hypervisor not only abstracts a hardware layer, but also supports running of each virtual machine. In a virtualization system, the Hypervisor directly deals with the hardware, and runs at a CPU Ring 0 level (e.g., having the highest access right to the hardware).

The Domain U is a virtual machine. The Domain 0 may be considered as a management node of another virtual machine, and generally, the domain 0 is the only virtual machine that runs on the Hypervisor, schedules the Hypervisor, has a right to access a physical I/O resource, and at the same time, interacts with another virtual machine that runs in a virtualization system.

This embodiment of the present invention is mainly directed to an application scenario where a Hypervisor component is upgraded online in a virtualization environment, which is described in detail in the following through a specific embodiment.

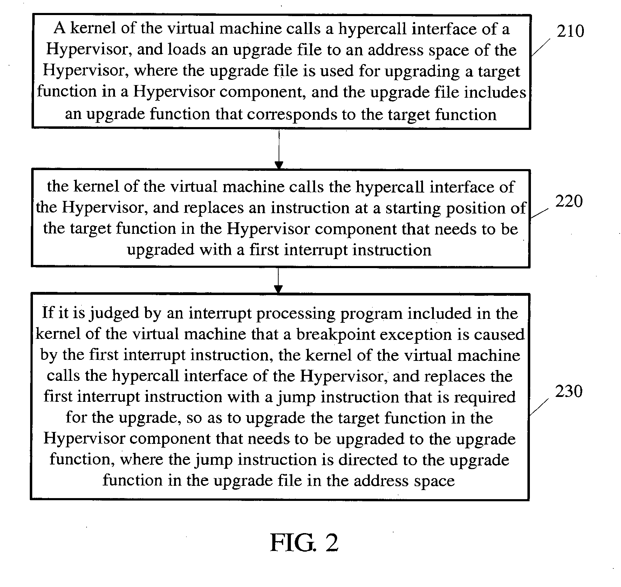

An embodiment of the present invention provides a method for upgrading a Hypervisor component. Referring to FIG. 2, the method specifically includes the following steps.

Referring to FIG. 2, the method may specifically include:
210: A kernel of a virtual machine calls a hypercall interface of a Hypervisor, and loads an upgrade file to an address space of the Hypervisor, where the upgrade file is used for upgrading a target function in a Hypervisor component, and the upgrade file includes an upgrade function that corresponds to the target function.

The target function is a function (an old function) to be upgraded. After the target function is upgraded, a new function that the program runs is the upgrade function (a new function) in the upgrade file, that is, the target function is upgraded to the upgrade function.

It should be noted that, in this embodiment, the kernel of the virtual machine is a kernel (for example, the kernel may include an upgrade managing module) of a virtual machine (for example a Domain 0 or another virtual machine with a similar function) that runs on the Hypervisor. Meanwhile, the Hypervisor provides a hypercall interface, and the kernel of the virtual machine may access the Hypervisor through the hypercall interface provided by the Hypervisor. Since in a virtualization environment, a user space (for example, an application program) cannot directly access the Hypervisor, in this embodiment, the kernel of the virtual machine may act as a proxy of the user space to access the Hypervisor, so as to perform an operation such as upgrading the Hypervisor component.

In this embodiment of the present invention, the calling a hypercall interface of the Hypervisor, and loading an upgrade file used for upgrading a target function in a Hypervisor component to an address space of the Hypervisor may specifically include:
calling the hypercall interface of the Hypervisor, and partitioning an upgrade memory area in the address space of the Hypervisor; and calling the hypercall interface of the Hypervisor, and loading the upgrade file used for upgrading the target function in the Hypervisor component to the upgrade memory area in the address space of the Hypervisor.

More specifically, this embodiment of the present invention further may include:
calling the hypercall interface of the Hypervisor, and partitioning an upgrade memory area in the address space of the Hypervisor; and
judging whether a current upgrade memory area in the address space of the Hypervisor has enough available space to load the upgrade file;
if the available space is enough, calling the hypercall interface of the Hypervisor, and loading the upgrade file used for upgrading the Hypervisor component to the upgrade memory area in the address space of the Hypervisor; and
if the available space is not enough, calling the hypercall interface of the Hypervisor, and partitioning another upgrade memory area in the address space of the Hypervisor, so that the address space of the Hypervisor has an enough upgrade memory area to load the upgrade file.

Definitely, the kernel of the virtual machine may also obtain the size of the upgrade file through another manner (for example, may directly count the number of bytes), and judge, according to the obtained size of the upgrade file, whether the current upgrade memory area in the address space of the Hypervisor has enough available space to load the upgrade file. If an upgrade memory area in the address space of the Hypervisor is large enough, the kernel of the virtual machine may consider by default that the current upgrade memory area in the address space of the Hypervisor has enough available space to load the upgrade file. Therefore, whether the upgrade memory area in the address space of the Hypervisor has enough free space may not be judged in advance, but the upgrade file may be loaded directly.

Definitely, if the upgrade memory area has too much free space (for example, some space in the upgrade memory area is never used), the upgrade managing module may also call the hypercall interface of the Hypervisor, and allocate a part of the space in the upgrade memory area in the address space of the Hypervisor to another program to use.

The loading the upgrade file used for upgrading the target function in the Hypervisor component to the upgrade memory area in the address space of the Hypervisor may specifically include:
judging whether a primary loading address recorded in the upgrade file that is used for upgrading the target function in the Hypervisor component is the same as a starting address of an upgrade memory area to where the upgrade file is to be loaded in the address space of the Hypervisor;
if the two addresses are the same, copying the upgrade file used for upgrading target function in the Hypervisor component to a corresponding upgrade memory area in the address space of the Hypervisor; and if the two addresses are different, relocating a symbol that corresponds to the target function and in the upgrade file used for upgrading the target function in the Hypervisor component so as to determine an address in the upgrade memory area where the target function that corresponds to the symbol in the upgrade file is loaded, and copying the upgrade file after relocation to a corresponding upgrade memory area in the address space of the Hypervisor.

220: The kernel of the virtual machine calls the hypercall interface of the Hypervisor, and replaces an instruction at a starting position of the target function in the Hypervisor component that needs to be upgraded with a first interrupt instruction.

The kernel of the virtual machine sets an upgrade triggering point by replacing the instruction at the starting position of the target function in the Hypervisor component that needs to be upgraded with the first interrupt instruction. Subsequently, when a system breakpoint exception is caused by the first interrupt instruction, the kernel of the virtual machine triggers the upgrade of the target function in the Hypervisor component.

230: If it is judged by an interrupt processing program included in the kernel of the virtual machine that a breakpoint exception is caused by the first interrupt instruction, the kernel of the virtual machine calls the hypercall interface of the Hypervisor, and replaces the first interrupt instruction with a jump instruction that is required for the upgrade, so as to upgrade the target function in the Hypervisor component that needs to be upgraded to the upgrade function, where the jump instruction is directed to the upgrade function in the upgrade file in the address space.

In an application scenario, for example, the kernel of the virtual machine may first call the hypercall interface of the Hypervisor, and generate an equivalent code of an instruction that is to be overwritten by the jump instruction, where the instruction to be overwritten is in the target function in the Hypervisor component that needs to be upgraded. The jump instruction is directed to an upgrade function that corresponds to the target function and in the upgrade file that is loaded to the address space of the Hypervisor (that is, the jump instruction is a jump instruction that is directed to the upgrade function that corresponds to the target function). Then, the kernel of the virtual machine calls the hypercall interface of the Hypervisor, and replaces the instruction at the starting position of the target function with the first interrupt instruction.

When a system breakpoint exception occurs (this breakpoint exception may be caused by an interrupt instruction, and may also be caused by other reasons), the interrupt processing program may judge whether the breakpoint exception is caused by the first interrupt instruction (that is, judge whether the breakpoint exception is caused by the upgrade). If the breakpoint exception is not caused by the first interrupt instruction, breakpoint processing is preformed according to a processing program that corresponds to the breakpoint exception. If the breakpoint exception is caused by the first interrupt instruction (that is, the breakpoint exception is caused by the upgrade, and furthermore, the breakpoint exception is to validate the upgrade function that corresponds to the target function in the Hypervisor component), the kernel of the virtual machine may call the hypercall interface of the Hypervisor, and check whether a CPU is executing the target function (in practice, the kernel of the virtual machine may call the hypercall interface of the Hypervisor to obtain a call stack of a CPU that corresponds to the Hypervisor, and check an execution situation of a current function of each CPU according to the obtained call stack, and further may check whether there is a CPU that is executing the target function). If it is checked that no CPU is executing the target function, the kernel of the virtual machine may call the hypercall interface of the Hypervisor, replace an interrupt instruction at the starting position of the target function with a jump instruction (the jump instruction is directed to the upgrade function that corresponds to the target function), and set a return address of the breakpoint exception to a starting address of the upgrade function. After the breakpoint exception is returned, the upgrade function is executed. Subsequently, when a thread is executed to the starting position of the target function again, according to the jump instruction, the thread jumps to the upgrade function that corresponds to the target function, and the upgrade function is executed.

In addition, if it is judged by the interrupt processing program that the breakpoint exception is caused by the first interrupt instruction (that is, the breakpoint exception is caused by the upgrade, and the breakpoint exception is to validate the upgrade function that corresponds to the target function in the Hypervisor component), and if the kernel of the virtual machine checks that a CPU is executing the target function, the kernel of the virtual machine may call the hypercall interface of the Hypervisor, replace the interrupt instruction at the starting position of the target function with the jump instruction, and set the return address of the breakpoint exception to a starting address of an equivalent code of the target function. After the breakpoint exception is returned, the equivalent code is executed. Subsequently, when a thread is executed to the starting position of the target function again, according to the jump instruction, the thread jumps to the upgrade function that corresponds to the target function, and the upgrade function is executed. Alternatively, the kernel of the virtual machine may create a deferred upgrade kernel thread. When the CPU finishes executing the target function, the target function is upgraded.

In practice, when the kernel of the virtual machine generates the equivalent code of the instruction that is to be overwritten by the jump instruction, where the instruction to be overwritten is in the target function in the Hypervisor. If the length of several instructions that are to be overwritten by the jump instruction and at the starting position of the target function is known (for example, some instructions to be overwritten by the jump instruction have a fixed length, and the length of the instructions to be overwritten by the jump instruction may be larger than or equal to the length of the jump instruction; and for example, the length of the jump instruction is 12 bytes, and the length of the several instructions that are to be overwritten by the jump instruction and at the starting position of the target function is 15 bytes), the kernel of the virtual machine may copy, according to the length of the jump instruction, several instructions that are to be replaced by the jump instruction and at the starting position of the target function, and generate a corresponding equivalent code; and if the length of the several instructions that are to be overwritten by the jump instruction and at the starting position of the target function is unknown, the kernel of the virtual machine may identify, according to an instruction code table (in the instruction code table, an operation code and the operation number of various kinds of instructions are recorded) and the number of bytes (that is, the length of the jump instruction) that are to be overwritten by the jump instruction and at the starting position of the target function in the Hypervisor component that needs to be upgraded, the length of instructions (including the operation code and the operation number) that are to be replaced by the jump instruction and at the starting position of the target function in the Hypervisor component one by one, and then copy, according to the identified length, several instructions that are to be replaced by the jump instruction and at the starting position of the target function, and generate a corresponding equivalent code.

It should be noted that the method described for upgrading the Hypervisor component that corresponds to the preceding validated upgrade file is only an example for illustration purpose. Based on this implementation, one or multiple other implementation methods may be used, which are not detailed here.

In addition, if the upgrade function needs to be restored to the target function (the upgrade restoration may be instructed by an application program in a user space), an interrupt instruction may be written, by using a method similar to that for validating the upgrade function, at starting positions of all target functions that need to be restored, where, the interrupt instruction is written in an atomic writing mode, and may be referred to as a second interrupt instruction. When a thread is executed to the second interrupt instruction, the thread triggers a breakpoint exception, and starts an interrupt processing program.

When a breakpoint exception occurs in a system, an interrupt processing program judges whether the breakpoint exception is caused by the second interrupt instruction (that is, judges whether the breakpoint exception is caused by the upgrade). If the breakpoint exception is not caused by the second interrupt instruction, breakpoint processing is performed according to a processing program that corresponds to the breakpoint exception. If it is judged by the interrupt processing program that the breakpoint exception is caused by the second interrupt instruction (that is, judges that the breakpoint exception is caused by the upgrade, and the breakpoint exception is to restore the upgrade), the kernel of the virtual machine may call the hypercall interface of the Hypervisor, and check whether a CPU is executing the upgrade function that corresponds to the target function in the Hypervisor component. If it is checked that no CPU is executing the upgrade function that corresponds to the target function in the Hypervisor component, the kernel of the virtual machine may call the hypercall interface of the Hypervisor, restore an instruction that is overwritten by the jump instruction and at the starting position of the target function, and set a return address of the breakpoint exception to a starting address of an equivalent code of the target function. After the breakpoint exception is returned, the equivalent code is executed. Subsequently, when a thread is executed to the starting position of the target function again, the upgrade function that corresponds to the target function is not executed but the target function is executed.

In addition, if it is judged by the interrupt processing program that the breakpoint exception is caused by the second interrupt instruction (that is, the breakpoint exception is caused by the upgrade, and the breakpoint exception is to restore the upgrade), and the kernel of the virtual machine checks that a CPU is executing the upgrade function that corresponds to the target function in the Hypervisor component, the kernel of the virtual machine may call the hypercall interface of the Hypervisor, restore the instruction that is overwritten by the jump instruction and at the starting position of the target function, and set the return address of the breakpoint exception to a starting address of the upgrade function. After the breakpoint exception is returned, the upgrade function is executed. Subsequently, when a thread is executed to the starting position of the target function again, the upgrade function that corresponds to the target function is not executed but the target function is executed. Alternatively, the kernel of the virtual machine may create a deferred restoration kernel thread. After the CPU finishes executing the upgrade function that corresponds to the target function, the target function is restored.

It may be understood that the kernel of the virtual machine in this embodiment may include multiple modules, and the multiple modules are used to perform upgrade collaboratively. To facilitate description, in this embodiment of the present invention, the kernel of the virtual machine, rather than each module of the kernel of the virtual machine, is used to describe execution of a corresponding step. For example, the kernel of the virtual machine may be disposed with an upgrade managing module, where the upgrade managing module is responsible for accessing the Hypervisor in a proxy mode and managing the upgrade of the Hypervisor component. When the kernel of the virtual machine that runs on the Hypervisor is started, the upgrade managing module may be loaded selectively, and definitely, each module of the kernel of the virtual machine may also be used to describe a step performed by the kernel of the virtual machine.

It can be seen from the preceding that, in this embodiment, the Hypervisor provides a hypercall interface; and the kernel of the virtual machine calls the hypercall interface of the Hypervisor, loads an upgrade file used for upgrading the target function in the Hypervisor component to the address space of the Hypervisor, calls the hypercall interface of the Hypervisor, and replaces the instruction at the starting position of the target function in the Hypervisor component that needs to be upgraded with an interrupt instruction; and if it is judged by the interrupt processing program that a breakpoint exception is caused by the interrupt instruction, calls the hypercall interface of the Hypervisor, and upgrades the target function in the Hypervisor component that needs to be upgraded to the upgrade function that corresponds to the target function and in the upgrade file. Because the Hypervisor component is upgraded online by using the hypercall interface provided by the Hypervisor, a service does not need to be migrated to another communication device in a live way, so that a device resource that upgrading the Hypervisor component needs to occupy is relatively reduced, and meanwhile, an impact caused by the upgrade of the Hypervisor component on an upper layer service is mitigated. Furthermore, with this upgrade mechanism, a service does not need to be interrupted, and with high instantaneity, upgrade time is relatively shorter.

For a better understanding of the technical solutions in the present invention, the technical solutions are described in the following by taking a scenario as an example.

In this embodiment, an upgrade managing module is deployed in a Domain 0 kernel. FIG. 3-a is a schematic diagram of a position where the upgrade managing module is deployed. The upgrade managing module deployed in the kernel of the Domain 0 can access a Hypervisor in a proxy mode and manage an upgrade of a Hypervisor component.

A scenario where an upgrade managing module is deployed in a kernel of another virtual machine may be analogized.

Referring to FIG. 4, specific steps may include:
401: An application program in a user space sends a Hypervisor component upgrade instruction to an upgrade managing module deployed in the kernel of a Domain 0.

When the kernel of the Domain 0 is started, the upgrade managing module may be loaded selectively. In this embodiment, a Hypervisor provides a hypercall interface, and the upgrade managing module deployed in the kernel of the Domain 0 may access the Hypervisor through the hypercall interface provided by the Hypervisor. In a virtualization environment, the user space (for example, the application program) cannot directly access the Hypervisor. However, the upgrade managing module deployed in the kernel of the Domain 0 may act as a proxy of the user space to access the Hypervisor, so as to perform an operation such as upgrading a Hypervisor component.

In an application scenario, an application program in a user space of the Domain 0 or of another virtual machine may call a syscall (Syscall) interface, send a Hypervisor component upgrade instruction through a "device upgrade file" to the upgrade managing module deployed in the kernel of the Domain 0, instruct the upgrade managing module to load an upgrade file used for upgrading a target function in a Hypervisor component, and upgrade the Hypervisor component.

402: The upgrade managing module deployed in the kernel of the Domain 0 calls the hypercall interface of the Hypervisor, and loads the upgrade file used for upgrading the Hypervisor component (to facilitate description, the upgrade file used for upgrading the target function in the Hypervisor component may be referred to as an upgrade file of a target Hypervisor component) to an address space of the Hypervisor.

In an application scenario, the upgrade managing module, for example, may call the hypercall interface of the Hypervisor, and directly load the upgrade file used for upgrading the target function in the Hypervisor component to the address space of the Hypervisor. Alternatively, to simplify the complexity of upgrade management, the upgrade managing module may also call the hypercall interface of the Hypervisor first, partition an upgrade memory area (the upgrade memory area may be specially used for buffering data related to an upgrade, which facilitates the upgrade management, and a partitioned upgrade memory area is shown in FIGS. 3a and 3b) in the address space of the Hypervisor, call the hypercall interface of the Hypervisor, and load the upgrade file used for upgrading the target function in the Hypervisor component to the upgrade memory area in the address space of the Hypervisor. The size of the partitioned upgrade memory area may be set specifically according to a specific requirement. For example, a 50 MB or 100 MB space or a space in another size may be partitioned in the address space of the Hypervisor and used as an upgrade memory area. Definitely, if the upgrade memory area does not have enough free space, the upgrade managing module may also call the hypercall interface of the Hypervisor, and partition another upgrade memory area in the address space of the Hypervisor. Definitely, if the upgrade memory area has too much free space (for example, some space is never used), the upgrade managing module may also call the hypercall interface of the Hypervisor, and partition part of the space of the upgrade memory area in the address space of the Hypervisor to another program to use.

One way for making the upgrade file used for upgrading the target function in the Hypervisor component may include: compiling a modified source code of Hypervisor component (an upgrade source code) in a compiling environment of an original compiling virtualized image to obtain an upgrade file of the target Hypervisor component; constructing the target-Hypervisor-component upgrade file that is obtained through compiling to a target-Hypervisor-component upgrade file that can be loaded and executed; and furthermore, translating relocation information of all symbols in the upgrade file of the target Hypervisor component into offset relocation information, and saving the offset relocation information to the upgrade file of the target Hypervisor component.

Furthermore, an absolute address symbol file and a relative address symbol file may also be generated and used for making an upgrade file next time. The absolute address symbol file may record a primary loading address (an absolute address in a memory) of an upgrade file that is made next time. The relative address symbol file may record a difference value between the primary loading address of the upgrade file that is made next time and a primary address of an upgrade file that is loaded to the memory earlier (or previously).

In practice, when an upgrade file is made, if the relocation information of all symbols in the upgrade file is translated into the offset relocation information and saved the offset relocation information to the upgrade file, before the upgrade file for upgrading the Hypervisor component is loaded to the upgrade memory area in the address space of the Hypervisor, the upgrade managing module may judge, according to the offset relocation information included in the upgrade file, whether a current upgrade memory area in the address space of the Hypervisor has enough available space to load the upgrade file. If the available space is not enough, the upgrade managing module may call the hypercall interface of the Hypervisor, and partition another upgrade memory area in the address space of the Hypervisor (a newly partitioned upgrade memory area and an original upgrade memory area can be uniformly managed).The upgrade managing module may also obtain the size of the upgrade file through another manner (for example, may directly count the number of bytes), and judge, according to the obtained size of the upgrade file, whether the current upgrade memory area in the address space of the Hypervisor has enough available space to load the upgrade file. Definitely, if the upgrade memory area in the address space of the Hypervisor is large enough, the upgrade managing module may consider by default that the upgrade memory area in the address space of the Hypervisor has enough available space to load the upgrade file. Therefore, whether the upgrade memory area in the address space of the Hypervisor has enough free space may not be judged in advance, but the upgrade file may be loaded directly.

In an application scenario, the step that the upgrade managing module loads the upgrade file used for upgrading the target function in the Hypervisor component to the upgrade memory area in the address space of the Hypervisor may include: judging whether a primary loading address recorded in the upgrade file that is used for upgrading the target function in the Hypervisor component is the same as a starting address of the upgrade memory area to where the upgrade file is to be loaded in the address space of the Hypervisor. If the two addresses are the same, the upgrade managing module may copy the upgrade file used for upgrading the target function in the Hypervisor component to a corresponding upgrade memory area in the address space of the Hypervisor; and if the two addresses are different, the upgrade managing module may relocate a symbol in the upgrade file used for upgrading the target function in the Hypervisor component so as to determine an address in a memory where the symbol in the upgrade file is to be loaded, and copy the upgrade file after relocation to the corresponding upgrade memory area in the address space of the Hypervisor. For example, the upgrade managing module may relocate, according to a difference value between a starting address of the upgrade memory area to where the upgrade file is to be loaded in the address space of the Hypervisor and a primary loading address that is recorded in the upgrade file, the symbol in the upgrade file used for upgrading the Hypervisor component, and obtain an upgrade file code that can be executed at a new address.

For example, it is assumed that the upgrade file includes three symbols A, B, and C, and offset relocation information of the symbol A is 10, offset relocation information of the symbol B is 20, and offset relocation information of the symbol C is 30. If the primary loading address that is recorded in the upgrade file is 0X000100, and an actual primary address where the upgrade file is to be loaded in the memory is 0X000500, the kernel of the virtual machine may first relocate symbols in the upgrade file and determine addresses where the symbols in the upgrade file are to be loaded in the memory. Through the relocation, it is determined that a loading address of the symbol A is 0X000510 (0X000500+10), a loading address of the symbol B is 0X000520 (0X000500+20), and a loading address of the symbol C is 0X000530 (OX000500+10).

403. The upgrade managing module calls the hypercall interface of the Hypervisor and validates an upgraded Hypervisor component which is upgraded with the upgrade file.

Validating the upgraded Hypervisor component which is upgraded with the upgrade file may be considered as setting the upgrade function (the upgrade function is a function used for upgrading the target function) that corresponds to the target function (the target function is a function to be upgraded) in the Hypervisor component to an executable state (including upgrading the target function in the Hypervisor component that needs to be upgraded to the upgrade function that corresponds to the target function and in the upgrade file). The upgrade managing module may validate, through multiple manners, the upgraded Hypervisor component which is upgraded with the upgrade file.

In an application scenario, for example, the upgrade managing module may first call the hypercall interface of the Hypervisor, and generate an equivalent code of an instruction that is to be overwritten by a jump instruction, where the instruction to be overwritten is in the target function in the Hypervisor component that needs to be upgraded. The jump instruction is directed to the upgrade function that corresponds to the target function (that is, the jump instruction is a jump instruction that is directed to the upgrade function corresponding to the target function).

To facilitate an understanding, the following describes a method for generating an equivalent code, which may include: The upgrade managing module allocates a memory space for an equivalent code, generates an equivalent code of an instruction that is to be overwritten by the jump instruction, where the instruction to be overwritten is in the target function in the Hypervisor component that needs to be upgraded, and copies the equivalent code to the memory space that is allocated to the equivalent code.

In practice, when the upgrade managing module generates the equivalent code of the instruction that is to be overwritten by the jump instruction, where the instruction to be overwritten is in the target function in the Hypervisor component that needs to be upgraded, if the length of several instructions that are to be overwritten by the jump instruction and at a starting position of the target function is known (for example, some instructions to be overwritten have a fixed length, and the length of the instructions to be overwritten may be larger than or equal to the length of the jump instruction, and for example, the length of the jump instruction is 12 bytes, and the length of the several instructions that are to be replaced by the jump instruction and at the starting position of the target function is 15 bytes), the upgrade managing module may copy, according to the length of the jump instruction, the several instructions that are to be overwritten by the jump instruction and at the starting position of the target function, and generate a corresponding equivalent code; and if the length of the several instructions that are to be overwritten by the jump instruction and at the starting position of the target function is unknown, the upgrade managing module may identify, according to an instruction code table (in the instruction code table, an operation code and the operation number of various kinds of instructions are recorded) and the number of bytes (that is, the length of the jump instruction) that are to be overwritten by the jump instruction and at the starting position of the target function in the Hypervisor component one by one, and then copy, according to the identified length, the several instructions that are to be overwritten by the jump instruction and at the starting position of the target function, and generate a corresponding equivalent code. In an application scenario, in a complex instruction system, the upgrade managing module may automatically decompile and parse a replaced instruction; and in a simple instruction system, the upgrade managing module may directly copy the replaced instruction.

Specifically, if instructions that are to be overwritten by the jump instruction and at the starting position of the target function in the Hypervisor component that needs to be upgraded include the jump instruction, during generation of the corresponding equivalent code, first, it is judged whether the jump instruction is an absolute jump instruction (a destination address to which the absolute jump instruction is directed is an absolute address) or a relative jump instruction (a destination address to which the relative jump instruction is directed is a relative address). If the jump instruction is an absolute jump instruction, a corresponding equivalent code can be directly generated; and if the jump instruction is a relative jump instruction, after a corresponding equivalent code is generated, a destination address to which the relative jump instruction is directed needs to be modified according to an address of the jump instruction in the equivalent code, so that when the jump instruction in the equivalent code is executed, the instruction can still jump to a position to where the instruction should jump originally, according to the modified destination address.

In addition, the upgrade managing module may further add a jump instruction at the end of the equivalent code according to a specific requirement. A destination address to where the added jump instruction is executed to jump is set to a position of a next instruction of an instruction that is to be overwritten by the jump instruction and at the starting position of the target function in the Hypervisor component, so that a thread jumps to the position of the next instruction to continue execution after finishing executing the equivalent code. It may be understood that if the equivalent code ends with a jump instruction or another interrupt instruction, a jump instruction may not need to be added at the end of the equivalent code.

After the equivalent code of the instruction that is to be overwritten by the jump instruction and at the starting position of the target function in the Hypervisor component is generated, the upgrade managing module may call the hypercall interface of the Hypervisor, and replace the instruction at the starting position of the target function with an interrupt instruction D1, where the interrupt instruction D1 is written in an atomic writing mode. When a thread is executed to the interrupt instruction D1, the thread triggers a breakpoint exception and starts an interrupt processing program.

In this embodiment, an interrupt processing program in a Domain 0 system can be extended. When receiving a breakpoint signal, the extended interrupt processing program may judge a reason that the breakpoint exception occurs, including judging whether the breakpoint exception is caused by an upgrade.

In a current virtualization system, a Hypervisor cannot be preempted. Therefore, the Hypervisor does not have multiple thread stacks. For this reason, only whether a stack of each CPU falls within a target function in a multi-core architecture needs to be considered.

In this embodiment, it is considered that a Domain 0 is bound to and executed on a CPU. The Domain 0 directly calls the Hypervisor, and therefore, if the Domain 0 is bound to and executed on a CPU, correspondingly, the Hypervisor is bounded to and executed on the CPU. This simplifies a mechanism in which whether the CPU is executing the target function in the Hypervisor component is checked, because the upgrade managing module obtains a call stack of a CPU that corresponds to the Hypervisor at a called hypercall interface of the Hypervisor, and checks current function execution of the CPU, so as to determine whether a CPU is executing the target function in the Hypervisor component. In a scenario where the Domain 0 is bound to and executed on a CPU, the upgrade managing module needs to obtain a call stack of only one CPU (a CPU on which the Hypervisor runs), so as to determine, according to the call stack of the CPU and current function execution of the CPU, whether the CPU is executing the target function in the Hypervisor component.

When a breakpoint exception (this breakpoint exception may be caused by the interrupt instruction D1, that is, caused by the upgrade, or caused by another reason) occurs in the Domain 0 system, an interrupt processing program may judge whether the breakpoint exception is caused by the upgrade. If the breakpoint exception is not caused by the upgrade, breakpoint processing is performed according to a processing program that corresponds to the breakpoint exception. If it is judged that the breakpoint exception is caused by the interrupt instruction D1 (that is, the breakpoint exception is caused by the upgrade, and the breakpoint exception is to validate the upgrade function that corresponds to the target function in the Hypervisor component), and the upgrade managing module checks that no CUP is executing the target function (in practice, the upgrade managing module may call the hypercall interface of the Hypervisor to obtain a call stack of a CPU that corresponds to the Hypervisor, and check, according to the obtained call stack, current function execution of each CPU one by one or concurrently to further check whether a CPU is executing the target function), the upgrade managing module may call the hypercall interface of the Hypervisor, replace an interrupt instruction at the starting position of the target function with a jump instruction (the jump instruction is directed to the upgrade function that corresponds to the target function), and set a return address of the breakpoint exception to a starting address of the upgrade function. After the breakpoint exception is returned, the upgrade function is executed. Subsequently, when a thread is executed to the starting position of the target function again, according to the jump instruction, the thread jumps to the upgrade function that corresponds to the target function, and the upgrade function is executed.

In addition, if it is judged by the interrupt processing program that the breakpoint exception is caused by the interrupt instruction D1 (that is, the breakpoint exception is caused by the upgrade, and the breakpoint exception is to validate the upgrade function that corresponds to the target function in the Hypervisor component), and the upgrade managing module checks that a CPU is executing the target function, the upgrade managing module calls the hypercall interface of the Hypervisor, replaces the interrupt instruction D1 at the starting position of the target function with a jump instruction, and sets the return address of the breakpoint exception to a starting address of an equivalent code of the target function. After the breakpoint exception is returned, the equivalent code is executed. Subsequently, when a thread is executed to the starting position of the target function again, according to the jump instruction, the thread jumps to the upgrade function that corresponds to the target function, and the upgrade function is executed. Alternatively, the upgrade managing module may create a deferred upgrade kernel thread. After the CPU finishes executing the target function, the target function is upgraded.

In practice, to ensure writing atomicity of a JMP instruction, the instruction may be written from a last byte to a first byte one by one. For example, if an operation code of an interrupt instruction INT3 is 0xCC (the interrupt instruction INT3 has only the operation code, and does not have the operation number), first, a byte of the operation number of the JMP instruction may be written to an address of a byte that follows the INT3, and the operation code 0xCC may be replaced with an operation code of the JMP instruction.

It should be noted that the way for validating an upgraded Hypervisor component which is upgraded with the upgrade file is only described as an example. Based on this implementation idea, one or multiple other implementation manners may be obtained, which are not detailed here.

In addition, if the upgrade function needs to be restored to the target function (the upgrade restoration may be instructed by an application program in a user space), the upgrade managing module may write, by using a method similar to that for validating the upgrade function, an interrupt instruction D2 at starting positions of all target functions that need to be restored, where the interrupt instruction D2 is written in an atomic writing mode.

When a thread is executed to the interrupt instruction, the thread triggers a breakpoint exception, and starts an interrupt processing program. When a breakpoint exception occurs in a Domain 0 system, the interrupt processing program may judge whether the breakpoint exception is caused by the upgrade (that is, judges whether the breakpoint exception is caused by the interrupt instruction D2). If the breakpoint exception is not caused by the upgrade, breakpoint processing is performed according to a processing program that corresponds to the breakpoint exception.

If it is judged that the breakpoint exception is caused by the interrupt instruction D2 (that is, the breakpoint exception is caused by the upgrade, and the breakpoint exception is to restore the upgrade), and the upgrade managing module checks that no CPU is executing the upgrade function that corresponds to the target function in the Hypervisor component, the upgrade managing module calls the hypercall interface of the Hypervisor, restores an instruction that is overwritten by the jump instruction and at the starting position of the target function (the instruction that is overwritten by the jump instruction after the interrupt instruction D2 may be restored first; and after other parts of all target functions are restored, all interrupt instructions are replaced with a target function instruction that is overwritten), and sets a return address of the breakpoint exception to a starting address of an equivalent code of the target function. After the breakpoint exception is returned, the equivalent code is executed. Subsequently, when a thread is executed to the starting position of the target function again, the upgrade function that corresponds to the target function is not executed but the target function is executed.

In addition, when the breakpoint exception occurs in the Domain 0 system, if it is judged by the interrupt processing program that the breakpoint exception is caused by the interrupt instruction D2 (that is, the breakpoint exception is caused by the upgrade and the breakpoint exception is to restore the upgrade), and it is checked that a CPU is executing the upgrade function that corresponds to the target function in the Hypervisor component, the upgrade managing module calls the hypercall interface of the Hypervisor, restores the instruction that is overwritten by the jump instruction and at the starting position of the target function, and sets the return address of the breakpoint exception to a starting address of the upgrade function. After the breakpoint exception is returned, the upgrade function is executed. Subsequently, when a thread is executed to the starting position of the target function again, the upgrade function that corresponds to the target function is not executed but the target function is executed. Alternatively, the upgrade managing module may create a deferred restoration kernel thread. After the CPU finishes executing the upgrade function that corresponds to the target function, the target function is restored.

It can be seen from the preceding that, in this embodiment, the Hypervisor provides a hypercall interface; the upgrade managing module deployed in the kernel of the Domain 0 calls the hypercall interface of the Hypervisor, loads the upgrade file used for upgrading target function in the Hypervisor component to the address space of the Hypervisor, and calls the hypercall interface of the Hypervisor to validate the upgraded Hypervisor component which is upgraded with the upgrade file. Because Hypervisor component is upgraded online through the hypercall interface provided by the Hypervisor, a service does not need to be migrated to another communication device in a live way, so that a device resource that upgrading the Hypervisor component needs to occupy is relatively reduced, and meanwhile, an impact caused by the upgrade of the Hypervisor component on an upper layer service is mitigated. Furthermore, with this upgrade mechanism, a service does not need to be interrupted, and with high instantaneity, upgrade time is relatively shorter.

Furthermore, a seamless upgrade may be implemented by using a mechanism of generating an equivalent code, and the impact on the upper layer service is further mitigated.

Referring to FIG. 5, based on the preceding embodiment, a computer system provided in an embodiment of the present invention may include: a CPU 510 and a storage 520. The storage 520 is configured to store a program code. The CPU 510 is configured to run a program that corresponds to the program code by reading the program code stored in the storage 520, where a kernel of the virtual machine and a Hypervisor run on the CPU 510.

The kernel of the virtual machine is configured to: call a hypercall interface of the Hypervisor, and load an upgrade file to an address space of the Hypervisor, where the upgrade file is used for upgrading a target function in a Hypervisor component, and the upgrade file includes an upgrade function that corresponds to the target function; and call the hypercall interface of the Hypervisor, and replace an instruction at a starting position of the target function in the Hypervisor component that needs to be upgraded with a first interrupt instruction.

The kernel of the virtual machine is further configured to, if it is judged by an interrupt processing program included in the kernel of the virtual machine that a breakpoint exception is caused by the first interrupt instruction in the kernel of the virtual machine, call the hypercall interface of the Hypervisor, and replace the first interrupt instruction with a jump instruction that is required for the upgrade, so as to upgrade the target function in the Hypervisor component that needs to be upgraded to the upgrade function, where the jump instruction is directed to the upgrade function in the upgrade file in the address space.

In an application scenario, the kernel of the virtual machine may call the hypercall interface of the Hypervisor, partition an upgrade memory area in the address space of the Hypervisor; and call the hypercall interface of the Hypervisor, and load the upgrade file used for upgrading the target function in the Hypervisor component to the upgrade memory area in the address space of the Hypervisor.

For example, the hypercall interface of the Hypervisor is called, and the upgrade memory area is partitioned in the address space of the Hypervisor; it is judged whether a current upgrade memory area in the address space of the Hypervisor has enough available space to load the upgrade file; if the available space is enough, the hypercall interface of the Hypervisor is called, and the upgrade file used for upgrading the target function in the Hypervisor component is loaded to the upgrade memory area in the address space of the Hypervisor; and if the available space is not enough, the hypercall interface of the Hypervisor is called, and another upgrade memory area is partitioned in the address space of the Hypervisor, so that the address space of the Hypervisor has an enough upgrade memory area to load the upgrade file.

The kernel of the virtual machine may also obtain the size of the upgrade file through another manner (for example, may directly count the number of bytes), and judge, according to the obtained size of the upgrade file, whether the current upgrade memory area in the address space of the Hypervisor has enough available space to load the upgrade file. If the upgrade memory area in the address space of the Hypervisor is large enough, the kernel of the virtual machine may consider by default that the current upgrade memory area in the address space of the Hypervisor has enough available space to load the upgrade file. Therefore, whether the upgrade memory area in the address space of the Hypervisor has enough free space may not be judged in advance but the upgrade file may be loaded directly.

If the upgrade memory area has too much free space (for example, some space in the upgrade memory area is never used), the kernel of the virtual machine may also call the hypercall interface of the Hypervisor, and allocate part of the space in the upgrade memory area in the address space of the Hypervisor to another program to use.

The kernel of the virtual machine may judge whether a primary loading address recorded in the upgrade file that is used for upgrading the target function in the Hypervisor component is the same as a starting address of an upgrade memory area to where the upgrade file is to be loaded in the address space of the Hypervisor; if the two addresses are the same, copy the upgrade file used for upgrading the target function in the Hypervisor component to a corresponding upgrade memory area in the address space of the Hypervisor; and if the two addresses are different, relocate a symbol that corresponds to the target function and in the upgrade file used for upgrading the target function in the Hypervisor component, so as to determine an address in the upgrade memory area where the target function that corresponds to the symbol in the upgrade file is to be loaded, and copy the upgrade file after relocation to the corresponding upgrade memory area in the address space of the Hypervisor.

The kernel of the virtual machine is specifically configured to, through the following manner, implement the calling the hypercall interface of the Hypervisor, and replacing the first interrupt instruction with the jump instruction that is required for the upgrade so as to upgrade the target function in the Hypervisor component that needs to be upgraded to the upgrade function:
checking whether a CPU is executing the target function;
if no CPU is executing the target function, calling the hypercall interface of the Hypervisor, and replacing the first interrupt instruction at a starting position of the target function with a jump instruction, and setting a return address of a breakpoint exception to a starting address of the upgrade function; and
if a CPU is executing the target function, calling the hypercall interface of the Hypervisor, and generating an equivalent code of an instruction that is to be overwritten by a jump instruction in the target function; and calling the hypercall interface of the Hypervisor, replacing the interrupt instruction at the starting position of the target function with the jump instruction, and setting the return address of the breakpoint exception to a starting address of the equivalent code.

The kernel of the virtual machine is further configured to, when the upgrade function needs to be restored to the target function, call the hypercall interface of the Hypervisor, and replace an instruction at the starting position of the target function with a second interrupt instruction.

When the interrupt processing program included in the kernel of the virtual machine judges that the breakpoint exception is caused by the second interrupt instruction, the kernel of the virtual machine calls the hypercall interface of the Hypervisor, and restores the upgrade function that is upgraded from the target function in the Hypervisor component to the target function.

In an application scenario, for example, if the upgrade function needs to be restored to the target function (the upgrade restoration may be instructed by a user space), a second interrupt instruction may be written, by using a method similar to that for validating the upgrade function, at starting positions of all target functions that need to be restored, where the second interrupt instruction is written in an atomic writing mode. When a thread is executed to the second interrupt instruction, the thread triggers a breakpoint exception, and starts an interrupt processing program. When a breakpoint exception occurs in a system, the interrupt processing program judges whether the breakpoint exception is caused by the second interrupt instruction (that is, judges whether the breakpoint exception is caused by the upgrade). If the breakpoint exception is not caused by the second interrupt instruction, breakpoint processing is performed according to a processing program that corresponds to the breakpoint exception. If it is judged by the interrupt processing program that the breakpoint exception is caused by the second interrupt instruction (that is, judges that the breakpoint exception is caused by the upgrade, and the breakpoint exception is to restore the upgrade), the kernel of the virtual machine may call the hypercall interface of the Hypervisor, and check whether a CPU is executing the upgrade function that corresponds to the target function in the Hypervisor component. If it is checked that no CPU is executing the upgrade function that corresponds to the target function in the Hypervisor component, the kernel of the virtual machine may call the hypercall interface of the Hypervisor, restore an instruction that is overwritten by the jump instruction and at the starting position of the target function, and set a return address of the breakpoint exception to a starting address of an equivalent code of the target function. After the breakpoint exception is returned, the equivalent code is executed. Subsequently, when a thread is executed to the starting position of the target function again, the upgrade function that corresponds to the target function is not executed but the target function is executed. In addition, if it is judged by the interrupt processing program that the breakpoint exception is caused by the second interrupt instruction (that is, the breakpoint exception is caused by the upgrade, and the breakpoint exception is to restore the upgrade), and the kernel of the virtual machine checks that a CPU is executing the upgrade function corresponding to the target function in the Hypervisor component, the kernel of the virtual machine calls the hypercall interface of the Hypervisor, restores the instruction that is overwritten by the jump instruction and at the starting position of the target function, and sets the return address of the breakpoint exception to a starting address of the upgrade function. After the breakpoint exception is returned, the upgrade function is executed. Subsequently, when a thread is executed to the starting position of the target function again, the upgrade function that corresponds to the target function is not executed but the target function is executed. Alternatively, the kernel of the virtual machine may create a deferred restoration kernel thread. After the CPU finishes executing the upgrade function that corresponds to the target function, the target function is restored.

This embodiment of the present invention is implemented based on the the preceding method embodiment. Other operations of the kernel of the virtual machine may be made reference to a related description in the preceding method embodiment. Those skilled in the art can implement various kinds of operations for the upgrade in the computer system according to a related description in the method embodiment, which are not detailed here.

In conclusion, in this embodiment of the present invention, the Hypervisor provides a hypercall interface; and the kernel of the virtual machine calls the hypercall interface of the Hypervisor, loads the upgrade file used for upgrading the target function in the Hypervisor component to the address space of the Hypervisor, calls the hypercall interface of the Hypervisor so as to validate an upgraded Hypervisor component which is upgraded with the upgrade file. The Hypervisor component is upgraded online through the hypercall interface provided by the Hypervisor. Because the Hypervisor component is upgraded online by using the hypercall interface provided by the Hypervisor, a service does not need to be migrated to another communication device in a live way, so that a device resource that upgrading the Hypervisor component needs to occupy is relatively reduced, and meanwhile, an impact caused by the upgrade of the Hypervisor component on an upper layer service is mitigated. Furthermore, with this upgrade mechanism, a service does not need to be interrupted, and with high instantaneity, upgrade time is relatively shorter.

Persons of ordinary skill in the art may understand that all or part of the steps of each method in the preceding embodiments may be implemented by a program instructing relevant hardware. The program may be stored in a computer readable storage medium. The storage medium may be a read only memory, a random access memory, a magnetic disk, or a compact disk.

The method and system for upgrading the Hypervisor component provided in the embodiments of the present invention are described in detail in the preceding. In this specification, specific examples are used to illustrate the principle and implementation manner of the present invention. Descriptions of the preceding embodiments are merely used for helping understanding of the method and core idea of the present invention. Meanwhile, persons of ordinary skill in the art may make various variations to the specific implementation manner and application scope according to the idea of the present invention. In conclusion, the contents of this specification should not be construed as a limitation on the present invention which is disclosed by the appended claims.

## Claims

1. A method for upgrading a Hypervisor component, comprising:
calling, by a kernel of a virtual machine, a hypercall interface of a Hypervisor, and loading an upgrade file to an address space of the Hypervisor, wherein the upgrade file is used for upgrading a target function in the Hypervisor component, and the upgrade file comprises an upgrade function that corresponds to the target function;
calling, by the kernel of the virtual machine, the hypercall interface of the Hypervisor, and replacing an instruction at a starting position of the target function in the Hypervisor component with a first interrupt instruction; and
if it is judged that a breakpoint exception is caused by the first interrupt instruction, calling, by the kernel of the virtual machine, the hypercall interface of the Hypervisor, and replacing the first interrupt instruction with a jump instruction, so as to upgrade the target function in the Hypervisor component to the upgrade function, wherein the jump instruction is directed to the upgrade function in the upgrade file in the address space.

2. The method according to claim 1, wherein the calling the hypercall interface of the Hypervisor, and loading an upgrade file to the address space of the Hypervisor comprises:
calling the hypercall interface of the Hypervisor, partitioning an upgrade memory area in the address space of the Hypervisor; and calling the hypercall interface of the Hypervisor, and loading the upgrade file to the upgrade memory area in the address space of the Hypervisor, wherein the upgrade file is used for upgrading the target function in the Hypervisor component.

3. The method according to claim 1, wherein the calling the hypercall interface of the Hypervisor, and loading an upgrade file to the address space of the Hypervisor comprises:
calling the hypercall interface of the Hypervisor, and partitioning an upgrade memory area in the address space of the Hypervisor; and
judging whether a current upgrade memory area in the address space of the Hypervisor has enough available space to load the upgrade file;
if the available space is enough, calling the hypercall interface of the Hypervisor, and loading the upgrade file to the upgrade memory area in the address space of the Hypervisor, wherein the upgrade file is used for upgrading the target function in the Hypervisor component; and
if the available space is not enough, calling the hypercall interface of the Hypervisor, and partitioning another upgrade memory area in the address space of the Hypervisor, so that the address space of the Hypervisor has an enough upgrade memory area to load the upgrade file.

4. The method according to claim 2 or 3, wherein: the loading the upgrade file to the upgrade memory area in the address space of the Hypervisor comprises:
judging whether a primary loading address recorded in the upgrade file is the same as a starting address of the upgrade memory area to where the upgrade file is to be loaded in the address space of the Hypervisor;
if the two addresses are the same, copying the upgrade file to a corresponding upgrade memory area in the address space of the Hypervisor;
if the two addresses are different, relocating a symbol that corresponds to the target function and in the upgrade file, so as to determine an address in the upgrade memory area where the symbol in the upgrade file is to be loaded, and copying the upgrade file after relocation to the corresponding upgrade memory area in the address space of the Hypervisor, wherein the upgrade file is used for upgrading the target function in the Hypervisor component.

5. The method according to claim 1, wherein the calling, by the kernel of the virtual machine, the hypercall interface of the Hypervisor, and replacing the first interrupt instruction with a jump instruction, so as to upgrade the target function in the Hypervisor component to the upgrade function comprises:
checking whether a central processing unit (CPU) is executing the target function;
if no CPU is executing the target function, calling the hypercall interface of the Hypervisor, and replacing the first interrupt instruction at a starting position of the target function with a jump instruction, and setting a return address of the breakpoint exception to a starting address of the upgrade function; and
if a CPU is executing the target function, calling the hypercall interface of the Hypervisor, and generating an equivalent code of an instruction that is to be overwritten by the jump instruction in the target function; and calling the hypercall interface of the Hypervisor, replacing the first interrupt instruction at the starting position of the target function with the jump instruction, and setting the return address of the breakpoint exception to a starting address of the equivalent code.

6. The method according to claim 5, further comprising:
if the upgrade function needs to be restored to the target function, calling, by the kernel of the virtual machine, the hypercall interface of the Hypervisor, and replacing an instruction at the starting position of the target function with a second interrupt instruction; and
if it is judged that the breakpoint exception is caused by the second interrupt instruction, calling, by the kernel of the virtual machine, the hypercall interface of the Hypervisor, and restoring the upgrade function that is upgraded from the target function to the target function.

7. The method according to claim 6, wherein the restoring the upgrade function that is upgraded from the target function in the Hypervisor component to the target function comprises:
checking whether a CPU is executing the upgrade function;
if no CPU is executing the upgrade function, calling the hypercall interface of the Hypervisor, and restoring the instruction that is overwritten by the jump instruction and at the starting position of the target function, and setting a return address of the breakpoint exception to a starting address of the equivalent code; and
if a CPU is executing the upgrade function, calling the hypercall interface of the Hypervisor, and restoring the instruction that is overwritten by the jump instruction and at the starting position of the target function, and setting the return address of the breakpoint exception to a starting address of the upgrade function.

8. A computer system, comprising a central processing unit (CPU), a storage for storing program code; and the CPU is configured to run a program that corresponds to the program code by reading the program code stored in the storage, and a kernel of a virtual machine and a Hypervisor; wherein:
the kernel of the virtual machine is configured to: call a hypercall interface of the Hypervisor, and load an upgrade file to an address space of the Hypervisor, wherein the upgrade file is used for upgrading a target function in a Hypervisor component, and the upgrade file comprises an upgrade function that corresponds to the target function; and call the hypercall interface of the Hypervisor, and replace an instruction at a starting position of the target function in the Hypervisor component with a first interrupt instruction; and
the kernel of the virtual machine is further configured to, if it is judged that a breakpoint exception is caused by the first interrupt instruction, call the hypercall interface of the Hypervisor, and replace the first interrupt instruction with a jump instruction, so as to upgrade the target function in the Hypervisor component to the upgrade function, wherein the jump instruction is directed to the upgrade function in the upgrade file in the address space.

9. The computer system according to claim 8, wherein the kernel of the virtual machine is specifically configured to:
check whether a CPU is executing the target function;
if no CPU is executing the target function, call the hypercall interface of the Hypervisor, and replace the first interrupt instruction at a starting position of the target function with a jump instruction, and set a return address of the breakpoint exception to a starting address of the upgrade function, so as to upgrade the target function in the Hypervisor component to the upgrade function; or
if a CPU is executing the target function, call the hypercall interface of the Hypervisor, and generate an equivalent code of an instruction that is to be overwritten by the jump instruction in the target function; and call the hypercall interface of the Hypervisor, replace the first interrupt instruction at the starting position of the target function with the jump instruction, and set the return address of the breakpoint exception to a starting address of the equivalent code, so as to upgrade the target function in the Hypervisor component to the upgrade function.

10. The computer system to claim 8 or 9, wherein
the kernel of the virtual machine is further configured to, if the upgrade function needs to be restored to the target function, call the hypercall interface of the Hypervisor, and replace an instruction at the starting position of the target function with a second interrupt instruction; and if it is judged that the breakpoint exception is caused by the second interrupt instruction, call the hypercall interface of the Hypervisor, and restore the upgrade function that is upgraded from the target function to the target function.

11. A computer program product, **characterized in**, comprising computer program code, which, when executed by a computer unit, will cause the computer unit to perform the method according to any one of claims 1 to 7.

## Patentansprüche

1. Verfahren zum Aufrüsten einer Hypervisor-Komponente, das Folgendes umfasst:
Aufrufen durch einen Kernel einer virtuellen Maschine einer Hyperaufruf-Schnittstelle eines Hypervisors und Laden einer Aufrüstdatei in einen Adressraum des Hypervisors, wobei die Aufrüstdatei zum Aufrüsten einer Zielfunktion in der Hypervisor-Komponente verwendet wird und die Aufrüstdatei eine Aufrüstfunktion umfasst, die der Zielfunktion entspricht;
Aufrufen durch den Kernel der virtuellen Maschine der Hyperaufruf-Schnittstelle des Hypervisors und Ersetzen einer Anweisung an einer Startposition der Zielfunktion in der Hypervisor-Komponente durch eine erste Unterbrechungsanweisung; und
falls beurteilt wird, dass eine Haltepunktausnahme durch die erste Unterbrechungsanweisung bewirkt wird, Aufrufen durch den Kernel der virtuellen Maschine der Hyperaufruf-Schnittstelle des Hypervisors und Ersetzen der ersten Unterbrechungsanweisung durch eine Sprunganweisung, um die Zielfunktion in der Hypervisor-Komponente auf die Aufrüstfunktion aufzurüsten, wobei die Sprunganweisung an die Aufrüstfunktion in der Aufrüstdatei in dem Adressraum gerichtet ist.

2. Verfahren nach Anspruch 1, wobei das Aufrufen der Hyperaufruf-Schnittstelle des Hypervisors und Laden einer Aufrüstdatei in den Adressraum des Hypervisors Folgendes umfasst:
Aufrufen der Hyperaufruf-Schnittstelle des Hypervisors, Partitionieren eines Aufrüstspeicherbereichs in dem Adressraum des Hypervisors; und Aufrufen der Hyperaufruf-Schnittstelle des Hypervisors und Laden der Aufrüstdatei in den Aufrüstspeicherbereich in dem Adressraum des Hypervisors, wobei die Aufrüstdatei zum Aufrüsten der Zielfunktion in der Hypervisor-Komponente verwendet wird.

3. Verfahren nach Anspruch 1, wobei das Aufrufen der Hyperaufruf-Schnittstelle des Hypervisors und Laden einer Aufrüstdatei in den Adressraum des Hypervisors Folgendes umfasst:
Aufrufen der Hyperaufruf-Schnittstelle des Hypervisors und Partitionieren eines Aufrüstspeicherbereichs in dem Adressraum des Hypervisors; und
Beurteilen, ob ein aktueller Aufrüstspeicherbereich in dem Adressraum des Hypervisors ausreichend verfügbaren Raum aufweist, um die Aufrüstdatei zu laden;
falls der verfügbare Raum ausreichend ist, Aufrufen der Hyperaufruf-Schnittstelle des Hypervisors und Laden der Aufrüstdatei in den Aufrüstspeicherbereich in dem Adressraum des Hypervisors, wobei die Aufrüstdatei zum Aufrüsten der Zielfunktion in der Hypervisor-Komponente verwendet wird; und
falls der verfügbare Raum nicht ausreichend ist, Aufrufen der Hyperaufruf-Schnittstelle des Hypervisors und Partitionieren eines weiteren Aufrüstspeicherbereichs in dem Adressraum des Hypervisors, so dass der Adressraum des Hypervisors ausreichend Aufrüstspeicherbereich aufweist, um die Aufrüstdatei zu laden.

4. Verfahren nach Anspruch 2 oder 3, wobei: das Laden der Aufrüstdatei in den Aufrüstspeicherbereich in dem Adressraum des Hypervisors Folgendes umfasst:
Beurteilen, ob eine primäre Ladeadresse, die in der Aufrüstdatei aufgezeichnet ist, dieselbe ist wie eine Startadresse des Aufrüstspeicherbereichs, in den die Aufrüstdatei in dem Adressraum des Hypervisors geladen werden soll;
falls die zwei Adressen dieselben sind, Kopieren der Aufrüstdatei in einen entsprechenden Aufrüstspeicherbereich in dem Adressraum des Hypervisors;
falls die zwei Adressen unterschiedlich sind, Verschieben eines Symbols, das der Zielfunktion und in der Aufrüstdatei entspricht, um eine Adresse in dem Aufrüstspeicherbereich, an der das Symbol in der Aufrüstdatei geladen werden soll, zu bestimmen, und Kopieren der Aufrüstdatei nach dem Verschieben in den entsprechenden Aufrüstspeicherbereich in dem Adressraum des Hypervisors, wobei die Aufrüstdatei zum Aufrüsten der Zielfunktion in der Hypervisor-Komponente verwendet wird.

5. Verfahren nach Anspruch 1, wobei das Aufrufen durch den Kernel der virtuellen Maschine der Hyperaufruf-Schnittstelle des Hypervisors und Ersetzen der ersten Unterbrechungsanweisung durch eine Sprunganweisung, um die Zielfunktion in der Hypervisor-Komponente auf die Aufrüstfunktion aufzurüsten, Folgendes umfasst:
Überprüfen, ob eine zentrale Verarbeitungseinheit (CPU) die Zielfunktion ausführt;
falls keine CPU die Zielfunktion ausführt, Aufrufen der Hyperaufruf-Schnittstelle des Hypervisors und Ersetzen der ersten Unterbrechungsanweisung an einer Startposition der Zielfunktion durch eine Sprunganweisung und Einstellen einer Rücksprungadresse der Haltepunktausnahme auf eine Startadresse der Aufrüstfunktion; und
falls eine CPU die Zielfunktion ausführt, Aufrufen der Hyperaufruf-Schnittstelle des Hypervisors und Erzeugen eines äquivalenten Codes einer Anweisung, die durch die Sprunganweisung in der Zielfunktion überschrieben werden soll; und Aufrufen der Hyperaufruf-Schnittstelle des Hypervisors, Ersetzen der ersten Unterbrechungsanweisung an der Startposition der Zielfunktion durch die Sprunganweisung und Einstellen der Rücksprungadresse der Haltepunktausnahme auf eine Startadresse des äquivalenten Codes.

6. Verfahren nach Anspruch 5, das ferner Folgendes umfasst:
falls die Aufrüstfunktion auf die Zielfunktion zurückgesetzt werden soll, Aufrufen durch den Kernel der virtuellen Maschine der Hyperaufruf-Schnittstelle des Hypervisors und Ersetzen einer Anweisung an der Startposition der Zielfunktion durch eine zweite Unterbrechungsanweisung; und
falls beurteilt wird, dass die Haltepunktausnahme durch die zweite Unterbrechungsanweisung verursacht wird, Aufrufen durch den Kernel der virtuellen Maschine, der Hyperaufruf-Schnittstelle des Hypervisors und Zurücksetzen der Aufrüstfunktion, die von der Zielfunktion aufgerüstet ist, auf die Zielfunktion.

7. Verfahren nach Anspruch 6, wobei das Zurücksetzen der Aufrüstfunktion, die von der Zielfunktion in der Hypervisor-Komponente aufgerüstet ist, auf die Zielfunktion Folgendes umfasst:
Überprüfen, ob eine CPU die Aufrüstfunktion ausführt;
falls keine CPU die Aufrüstfunktion ausführt, Aufrufen der Hyperaufruf-Schnittstelle des Hypervisors und Zurücksetzen der Anweisung, die durch die Sprunganweisung überschrieben ist, und an der Startposition der Zielfunktion, und Einstellen einer Rücksprungadresse der Haltepunktausnahme auf eine Startadresse des äquivalenten Codes; und
falls eine CPU die Aufrüstfunktion ausführt, Aufrufen der Hyperaufruf-Schnittstelle des Hypervisors und Zurücksetzen der Anweisung, die durch die Sprunganweisung überschrieben ist, und an der Startposition der Zielfunktion, und Einstellen der Rücksprungadresse der Haltepunktausnahme auf eine Startadresse der Aufrüstfunktion.

8. Computersystem, das eine zentrale Verarbeitungseinheit (CPU) und einen Speicher zum Speichern von Programmcode aufweist; und wobei die CPU konfiguriert ist, ein Programm, das dem Programmcode entspricht, durch Lesen des Programmcodes, der in dem Speicher gespeichert ist, und einen Kernel einer virtuellen Maschine und einen Hypervisor auszuführen; wobei:
der Kernel der virtuellen Maschine konfiguriert ist: eine Hyperaufruf-Schnittstelle des Hypervisors aufzurufen und eine Aufrüstdatei in einen Adressraum des Hypervisors zu laden, wobei die Aufrüstdatei zum Aufrüsten einer Zielfunktion in einer Hypervisor-Komponente verwendet wird und die Aufrüstdatei eine Aufrüstfunktion umfasst, die der Zielfunktion entspricht; und die Hypervisor-Schnittstelle des Hypervisors aufzurufen und eine Anweisung an einer Startposition der Zielfunktion in der Hypervisor-Komponente durch eine erste Unterbrechungsanweisung zu ersetzen; und
der Kernel der virtuellen Maschine ferner konfiguriert ist, falls beurteilt wird, dass eine Haltepunktausnahme durch die erste Unterbrechungsanweisung verursacht wird, die Hyperaufruf-Schnittstelle des Hypervisors aufzurufen und die erste Unterbrechungsanweisung durch eine Sprunganweisung zu ersetzen, um die Zielfunktion in der Hypervisor-Komponente auf die Aufrüstfunktion aufzurüsten, wobei sich die Sprunganweisung an die Aufrüstfunktion in der Aufrüstdatei in dem Adressraum richtet.

9. Computersystem nach Anspruch 8, wobei der Kernel der virtuellen Maschine insbesondere konfiguriert ist:
zu überprüfen, ob eine CPU die Zielfunktion ausführt;
falls keine CPU die Zielfunktion ausführt, die Hyperaufruf-Schnittstelle des Hypervisors aufzurufen und die erste Unterbrechungsanweisung an einer Startposition der Zielfunktion durch eine Sprunganweisung zu ersetzen und eine Rücksprungadresse der Haltepunktausnahme auf eine Startadresse der Aufrüstfunktion einzustellen, um die Zielfunktion in der Hypervisor-Komponente auf die Aufrüstfunktion aufzurüsten; oder
falls eine CPU die Zielfunktion ausführt, die Hyperaufruf-Schnittstelle des Hypervisors aufzurufen und einen äquivalenten Code einer Anweisung, die durch die Sprunganweisung in der Zielfunktion überschrieben werden soll, zu erzeugen; und die Hyperaufruf-Schnittstelle des Hypervisors aufzurufen, die erste Unterbrechungsanweisung an der Startposition der Zielfunktion durch die Sprunganweisung zu ersetzen und die Rücksprungadresse der Haltepunktausnahme auf eine Startadresse des äquivalenten Codes einzustellen, um die Zielfunktion in der Hypervisor-Komponente auf die Aufrüstfunktion aufzurüsten.

10. Computersystem nach Anspruch 8 oder 9, wobei
der Kernel der virtuellen Maschine ferner konfiguriert ist, falls die Aufrüstfunktion auf die Zielfunktion zurückgesetzt werden soll, die Hyperaufruf-Schnittstelle des Hypervisors aufzurufen und eine Anweisung an der Startposition der Zielfunktion durch eine zweite Unterbrechungsanweisung zu ersetzen; und falls beurteilt wird, dass die Haltepunktausnahme durch die zweite Unterbrechungsanweisung verursacht wird, die Hyperaufruf-Schnittstelle des Hypervisors aufzurufen und die Aufrüstfunktion, die von der Zielfunktion aufgerüstet ist, auf die Zielfunktion zurückzusetzen.

11. Computerprogrammprodukt, **dadurch gekennzeichnet, dass** es Computerprogrammcode umfasst, der dann, wenn er durch eine Computereinheit ausgeführt wird, bewirkt, dass die Computereinheit das Verfahren nach einem der Ansprüche 1 bis 7 ausführt.

## Revendications

1. Procédé de mise à niveau d'un composant Hyperviseur, comprenant :
l'appel, par un noyau d'une machine virtuelle, d'une interface d'hyperappel d'un Hyperviseur, et le chargement d'un fichier de mise à niveau vers un espace d'adressage de l'Hyperviseur, dans lequel le fichier de mise à niveau est utilisé pour mettre à niveau une fonction cible dans le composant Hyperviseur, et le fichier de mise à niveau comprend une fonction de mise à niveau correspondant à la fonction cible ;
l'appel, par le noyau d'une machine virtuelle, de l'interface d'hyperappel de l'Hyperviseur, et le remplacement d'une instruction à une position de départ de la fonction cible dans le composant Hyperviseur par une première instruction d'interruption ; et
s'il est jugé qu'une exception de point d'arrêt est provoquée par la première instruction d'interruption, l'appel, par le noyau de la machine virtuelle, de l'interface d'hyperappel de l'Hyperviseur, et le remplacement de la première instruction d'interruption par une instruction de saut, de manière à mettre à niveau la fonction cible dans le composant Hyperviseur vers la fonction de mise à niveau, dans lequel l'instruction de saut est destinée à la fonction de mise à niveau dans le fichier de mise à niveau dans l'espace d'adressage.

2. Procédé selon la revendication 1, dans lequel l'appel de l'interface d'hyperappel de l'Hyperviseur, et le chargement d'un fichier de mise à niveau dans l'espace d'adressage de l'Hyperviseur comprennent :
l'appel de l'interface d'hyperappel de l'Hyperviseur, le partitionnement d'une zone de mémoire de mise à niveau dans l'espace d'adressage de l'Hyperviseur ; et l'appel de l'interface d'hyperappel de l'Hyperviseur, et le chargement du fichier de mise à niveau vers la zone de mémoire de mise à niveau dans l'espace d'adressage de l'Hyperviseur, dans lequel le fichier de mise à niveau est utilisé pour mettre à niveau la fonction cible dans le composant Hyperviseur.

3. Procédé selon la revendication 1, dans lequel l'appel de l'interface d'hyperappel de l'Hyperviseur, et le chargement d'un fichier de mise à niveau vers l'espace d'adressage de l'Hyperviseur comprennent :
l'appel de l'interface d'hyperappel de l'Hyperviseur, et le partitionnement d'une zone de mémoire de mise à niveau dans l'espace d'adressage de l'Hyperviseur ; et
le jugement du fait de savoir si une zone de mémoire de mise à niveau courante dans l'espace d'adressage de l'Hyperviseur comporte un espace disponible suffisant pour charger le fichier de mise à niveau ;
si l'espace disponible est suffisant, l'appel de l'interface d'hyperappel de l'Hyperviseur, et le chargement du fichier de mise à niveau vers la zone de mémoire de mise à niveau dans l'espace d'adressage de l'Hyperviseur, dans lequel le fichier de mise à niveau est utilisé pour mettre à niveau la fonction cible dans le composant Hyperviseur ; et
si l'espace disponible n'est pas suffisant, l'appel de l'interface d'hyperappel de l'Hyperviseur, et le partitionnement d'une autre zone de mémoire de mise à niveau dans l'espace d'adressage de l'Hyperviseur, de manière à ce que l'espace d'adressage de l'Hyperviseur comporte une zone de mémoire de mise à niveau suffisante pour charger le fichier de mise à niveau.

4. Procédé selon la revendication 2 ou 3, dans lequel : le chargement du fichier de mise à niveau vers la zone de mémoire de mise à niveau dans l'espace d'adressage de l'Hyperviseur comprend :
le jugement du fait de savoir si une adresse de chargement primaire enregistrée dans le fichier de mise à niveau est identique à une adresse de départ de la zone de mémoire de mise à niveau vers laquelle le fichier de mise à niveau doit être chargé dans l'espace d'adressage de l'Hyperviseur ;
si les deux adresses sont identiques, la recopie du fichier de mise à niveau vers une zone de mémoire de mise à niveau correspondante dans l'espace d'adressage de l'Hyperviseur ;
si les deux adresses sont différentes, le repositionnement d'un symbole qui correspond à la fonction cible dans le fichier de mise à niveau, de manière à déterminer une adresse dans la zone de mémoire de mise à niveau à laquelle le symbole contenu dans le fichier de mise à niveau doit être chargé, et la recopie du fichier de mise à niveau après le repositionnement vers la zone de mémoire de mise à niveau correspondante dans l'espace d'adressage de l'Hyperviseur, dans lequel le fichier de mise à niveau est utilisé pour mettre à niveau la fonction cible dans le composant Hyperviseur.

5. Procédé selon la revendication 1, dans lequel l'appel, par le noyau de la machine virtuelle, de l'interface d'hyperappel de l'Hyperviseur, et le remplacement de la première instruction d'interruption par une instruction de saut, de manière à mettre à niveau la fonction cible dans le composant Hyperviseur vers la fonction de mise à niveau comprennent :
la vérification du fait de savoir si une unité centrale de traitement (CPU) est en train d'exécuter la fonction cible ;
si aucune CPU n'est en train d'exécuter la fonction cible, l'appel de l'interface d'hyperappel de l'Hyperviseur, et le remplacement de la première instruction d'interruption à une position de départ de la fonction cible par une fonction de saut, et le réglage d'une adresse de retour de l'exception de point d'arrêt à une adresse de départ de la fonction de mise à niveau ; et
si une CPU est en train d'exécuter la fonction cible, l'appel de l'interface d'hyperappel de l'Hyperviseur, et la génération d'un code équivalent d'une instruction devant être écrasée par l'instruction de saut dans la fonction cible ; et l'appel de l'interface d'hyperappel de l'Hyperviseur, le remplacement de la première instruction d'interruption à la position de départ de la fonction cible par l'instruction de saut, et le réglage de l'adresse de retour de l'exception de point d'arrêt à une adresse de départ du code équivalent.

6. Procédé selon la revendication 5, comprenant en outre :
si la fonction de mise à niveau doit être rétablie à la fonction cible, l'appel, par le noyau de la machine virtuelle, de l'interface d'hyperappel de l'Hyperviseur, et le remplacement d'une instruction à la position de départ de la fonction cible par une seconde instruction d'interruption ; et
s'il est jugé que l'exception de point d'arrêt est provoquée par la seconde instruction d'interruption, l'appel, par le noyau de la machine virtuelle, de l'interface d'hyperappel de l'Hyperviseur, et le rétablissement de la fonction de mise à niveau qui est mise à niveau depuis la fonction cible à la fonction cible.

7. Procédé selon la revendication 6, dans lequel le rétablissement de la fonction de mise à niveau qui est mise à niveau depuis la fonction cible dans le composant Hyperviseur à la fonction cible comprend :
la vérification du fait de savoir si une CPU est en train d'exécuter la fonction de mise à niveau ;
si aucune CPU n'est en train d'exécuter la fonction de mise à niveau, l'appel de l'interface d'hyperappel de l'Hyperviseur, et le rétablissement de l'instruction qui est écrasée par l'instruction de saut et à la position de départ de la fonction cible, et le réglage d'une adresse de retour de l'exception de point d'arrêt à une adresse de départ du code équivalent ; et
si une CPU est en train d'exécuter la fonction de mise à niveau, l'appel de l'interface d'hyperappel de l'Hyperviseur, et le rétablissement de l'instruction qui est écrasée par l'instruction de saut et à la position de départ de la fonction cible, et le réglage de l'adresse de retour de l'exception de point d'arrêt à une adresse de départ de la fonction de mise à niveau.

8. Système informatique, comprenant une unité centrale de traitement (CPU), une unité de stockage pour stocker un code de programme ; la CPU étant configurée pour exécuter un programme qui correspond au code de programme en lisant le code de programme stocké dans l'unité de stockage, et un noyau d'une machine virtuelle et un Hyperviseur ; dans lequel :
le noyau de la machine virtuelle est configuré pour : appeler une interface d'hyperappel de Hyperviseur, et charger un fichier de mise à niveau vers un espace d'adressage de l'Hyperviseur, dans lequel le fichier de mise à niveau est utilisé pour mettre à niveau une fonction cible dans un composant Hyperviseur, et le fichier de mise à niveau comprend une fonction de mise à niveau qui correspond à la fonction cible ; et appeler l'interface d'hyperappel de l'Hyperviseur, et remplacer une instruction à une position de départ de la fonction cible dans le composant Hyperviseur par une première instruction d'interruption ; et
le noyau de la machine virtuelle est en outre configuré pour, s'il est jugé qu'une exception de point d'arrêt est provoquée par la première instruction d'interruption, appeler l'interface d'hyperappel de l'Hyperviseur, et remplacer la première instruction d'interruption par une instruction de saut, de manière à mettre à niveau la fonction cible dans le composant Hyperviseur vers la fonction de mise à niveau, dans lequel l'instruction de saut est destinée à la fonction de mise à niveau dans le fichier de mise à niveau dans l'espace d'adressage.

9. Système informatique selon la revendication 8, dans lequel le noyau de la machine virtuelle est spécifiquement configuré pour :
vérifier si une CPU est en train d'exécuter la fonction cible ;
si aucune CPU n'est en train d'exécuter la fonction cible, appeler l'interface d'hyperappel de l'Hyperviseur, et remplacer la première instruction d'interruption à une position de départ de la fonction cible par une instruction de saut, et régler une adresse de retour de l'exception de point d'arrêt à une adresse de départ de la fonction de mise à niveau, de manière à mettre à niveau la fonction cible dans le composant Hyperviseur vers la fonction de mise à niveau ; ou
si une CPU est en train d'exécuter la fonction cible, appeler l'interface d'hyperappel de l'Hyperviseur, et générer un code équivalent d'une instruction devant être écrasée par l'instruction de saut dans la fonction cible ; et appeler l'interface d'hyperappel de l'Hyperviseur, remplacer la première instruction d'interruption à la position de départ de la fonction cible par l'instruction de saut, et régler l'adresse de retour de l'exception de point d'arrêt à une adresse de départ du code équivalent, de manière à mettre à niveau la fonction cible dans le composant Hyperviseur vers la fonction de mise à niveau.

10. Système informatique selon la revendication 8 ou 9, dans lequel le noyau de la machine virtuelle est en outre configuré pour, si la fonction de mise à niveau doit être rétablie à la fonction cible, appeler l'interface d'hyperappel de l'Hyperviseur, et remplacer une instruction à la position de départ de la fonction cible par une seconde instruction d'interruption ; et s'il est jugé que l'exception de point d'arrêt est provoquée par la seconde instruction d'interruption, appeler l'interface d'hyperappel de l'Hyperviseur, et rétablir la fonction de mise à niveau qui est mise à niveau depuis la fonction cible à la fonction cible.

11. Produit de programme informatique, **caractérisé en ce qu'**il comprend un code de programme informatique qui, lorsqu'il est exécuté par une unité informatique, fait en sorte que l'unité informatique mette en oeuvre le procédé selon l'une quelconque des revendications 1 à 7.
